Europäisches Patentamt

European Patent Office

Office européen des brevets

(11) Veröffentlichungsnummer: **0 002 766**
**A1**

## (12) EUROPÄISCHE PATENTANMELDUNG

(21) Anmeldenummer: 78101739.7

(22) Anmeldetag: 16.12.78

(51) Int. Cl.²: **C 08 L 97/02**, C 08 L 23/02, C 08 L 25/04 // (C08K3/22, C08L23/02, 25/04, 97/02)

(30) Priorität: 22.12.77 DE 2757258

(43) Veröffentlichungstag der Anmeldung: 11.07.79 Patentblatt 79/14

(84) Benannte Vertragsstaaten: BE CH DE FR GB IT

(71) Anmelder: BASF Aktiengesellschaft, Carl-Bosch-Strasse 38, D-6700 Ludwigshafen (DE)

(72) Erfinder: Theysohn, Rainer, Dr., Bruesseler Ring 38, D-6700 Ludwigshafen (DE)
Erfinder: Noetzel, Wolfram, Dr., Kranichstrasse 14, D-6700 Ludwigshafen (DE)
Erfinder: Pfirrmann, Guenther, Dr., Osloer Weg 38, D-6700 Ludwigshafen (DE)
Erfinder: Zeitler, Gerhard, Dr., Lessingstrasse 11, D-6711 Hessheim (DE)

(54) **Holzmehlgefüllte thermoplastische Formmassen mit verbesserten Verarbeitungseigenschaften und ihre Verwendung zur Herstellung geformter Formteile.**

(57) Die Erfindung betrifft Formmassen, bestehend aus 100 Gewichtsteilen Holzteilchen und 50 bis 900 Gewichtsteilen eines Olefinpolymerisats oder Styrolpolymerisats und 1 bis 15 Gewichtsteilen eines MgO-Pulvers. Das Olefin- bzw. Styrolpolymerisat kann bevorzugt Carboxylgruppen enthalten, wobei unter Carboxylgruppen enthaltenden Polymerisaten Pfropfpolymerisate von monoäthylenisch ungesättigten Carbonsäuren auf Polyolefine bzw. Polystyrol verstanden werden. Die Formmassen eignen sich für den Spritzguß und die Extrusion und zeichnen sich durch eine helle Eigenfarbe aus.

EP 0 002 766 A1

BASF Aktiengesellschaft                    O.Z. 0050/032 955

Holzmehlgefüllte thermoplastische Formmassen mit verbesserten Verarbeitungseigenschaften

Die Erfindung betrifft Formmassen, die bestehen aus einem homogenen Gemisch aus Holzteilchen, thermoplastischem Kunststoff und einem Verarbeitungsstabilisator.

Mit Holzmehl gefüllte thermoplastische Formmassen sind wegen ihres günstigen Preises, bezogen auf das Volumen der Formmassen, im Vergleich zu beispielsweise mit mineralischen Füllstoffen gefüllten Thermoplasten von Interesse. Durch den Füllstoff Holzmehl wird die Steifigkeit und die Wärmeformbeständigkeit solcher Formmassen durchweg erhöht, was vor allem für den Einsatz im Kraftfahrzeugsektor wünschenswert ist. Zur Einarbeitung des Holzmehls in Thermoplaste und zur Weiterverarbeitung der gefüllten Formmassen, z.B. durch Spritzguß oder durch Extrusion, sind gewöhnlich Temperaturen erforderlich, bei denen der Zersetzungspunkt des Holzes, der bei ca 180°C liegt, zumindest kurzzeitig überschritten wird. Als Folge davon können einmal saure Pyrolyseprodukte des Holzes, wie Essigsäure, frei werden, die zu Korrosionserscheinungen an den Verarbeitungsmaschinen führen, zum anderen können teerähnliche Produkte ausschwitzen, die in kurzer Zeit zu festhaftenden Belägen, z.B. auf Spritzgrußformen oder Kalanderwalzen, führen.

Fre/Fe

0002766

Es hat daher nicht an Versuchen gefehlt, durch Zugabe spezieller Verbindungen diese nachteiligen Effekte, vor allem das Entstehen von sauren Pyrolyseprodukten, zu reduzieren oder gänzlich auszuschalten. So wird in der DE-AS 25 30 307 ein Verfahren beschrieben, bei dem holzmehlgefüllte Thermoplaste mit einer Kombination aus Polymerstabilisator, gängigen Gleitmitteln und Harnstoff ausgerüstet werden, um eine einwandfreie Verarbeitung zu erzielen.

Wie sich bei einer Vielzahl von holzmehlgefüllten Thermoplasten unterschiedlichen Typs gezeigt hat, ist die bekannte Kombination zwar in der Lage, Korrosionsschäden durch saure Pyrolyseprodukte in gewissem Umfange zu reduzieren. Ein positiver Einfluß auf teerartige Ablagerungen an den Verarbeitungswerkzeugen, die längerfristig zu Verklebungen und Entformungsschwierigkeiten führen, war jedoch nicht feststellbar. Zudem wiesen solche Formmassen zumeist eine dunklere Eigenfarbe auf, was bei Pigmentierungen zu Schwierigkeiten führen kann.

Der vorliegenden Erfindung lag daher die Aufgabe zugrunde, einen Verarbeitungsstabilisator für holzmehlgefüllte thermoplastische Materialien zu finden, der die angeführten Nachteile nicht aufweist.

Diese Aufgabe wurde erfindungsgemäß gelöst durch Formmassen, bestehend aus einem homogenen Gemisch aus:

A) 100 Gewichtsteilen Holzteilchen mit Teilchengrößen von 10 bis 5 000 µm,

B) 50 bis 900 Gewichtsteilen eines thermoplastischen Olefinpolymerisats mit einem Schmelzindex zwischen 0,01 und 20 g/10 min und einer Dichte zwischen 0,890 und 0,965 g/cm$^3$ oder eines thermoplastischen Styrolpolymerisats mit einem Schmelzindex zwischen 1 und
20 g/10 min und einem Molekulargewicht aus der Lösungsviskosität zwischen 150 000 und 500 000,

C) 1 bis 15 Gewichtsteilen eines Magnesiumoxids mit Teilchengrößen von 0,01 bis 40 $\mu$m sowie gegebenenfalls

D) üblichen Zusätzen in üblichen Mengen.

Die Mischungskomponente (B) besteht gegebenenfalls aus den
Carboxylgruppen enthaltenden Olefin- oder Styrolpolymerisaten.

Unter Formmassen werden ungeformte oder vorgeformte Stoffe
verstanden, die nach bekannten Verfahren durch spanloses
Formen innerhalb bestimmter Temperaturbereiche zu geformten Formteilen oder Halbzeug verarbeitet werden können.
Die Formmassen können pulverförmig oder körnig vorliegen,
vielfach sind sie auch durch Granulierung oder Tablettierung vorgeformt. Im vorliegenden Fall stellen die Formmassen innig vermischte, gleichmäßige Gemische aus Holzteilchen, Thermoplast, Magnesiumoxid und gegebenenfalls
üblichen Zusatzstoffen dar.

Die Holzteilchen (A) sind in den erfindungsgemäßen Formmassen mit 100 Gewichtsteilen enthalten. Für die erfindungsgemäßen Formmassen geeignetes feinteiliges Holz ist
das einschlägig übliche, insbesondere Holz in Form von
Spänen, Fasern oder Mehl. Als Holzteilchen kommen alle
marktgängigen Typen in einem Teilchenbereich von 10 bis
5 000 $\mu$m Länge und 10 bis 2 000 $\mu$m Dicke, vorzugsweise
50 bis 2 000 $\mu$m Länge und 50 bis 1 000 $\mu$m Dicke, in Betracht. Das Material kann sowohl aus Hartholz wie Buche,
Eiche etc. aber auch auf Basis von weichen Hölzern wie Fichte, Tanne, Kiefer, Pappel etc. bestehen. Die Holzmehle können sowohl in Pulverform als auch kompaktiert eingesetzt werden, sie können zudem oberflächenbehandelt sein im Hinblick auf eine bessere Verarbeitbarkeit und einer besseren Haftung gegenüber dem Polymerisat. Der Feuchtigkeitsgehalt des Holzes liegt zweckmäßig unter 10, bevorzugt bei 0,5 bis 5 Gewichtsprozent.

Als Olefinpolymerisat (B), das in der Mischung mit 50 bis 900, bevorzugt 100 bis 300, Gewichtsteilen eingemischt ist, kommen die einschlägig bekannten Olefinpolymerisate in Betracht. Die verwendeten Olefinpolymerisate sind charakterisiert durch einen Schmelzindex zwischen 0,01 und 20, bevorzugt 0,1 und 10 g/10 min, gemessen nach ASTM D 1238-65T bei einer Temperatur von $190^{\circ}$C und einem Auflagegewicht von 2,16 kg bei Äthylenpolymerisaten bzw. $230^{\circ}$C und 2,16 kg bei Propylenpolymerisaten und eine Dichte zwischen 0,890 und 0,965 g/cm$^3$, gemessen nach DIN 53 479.

Als Olefinpolymerisate bevorzugt sind die Homopolymerisate des Äthylens und des Propylens, die Äthylen-Propylen-Copolymerisate sowie Copolymerisate des Äthylens mit $C_1$- bis $C_4$-Acrylsäureestern oder $C_2$- bis $C_4$-Alkancarbonsäurevinylestern, wobei mindestens 50 Gew.% Äthylen einpolymerisiert sind sowie Mischungen aus den aufgeführten Polymerisaten. Diese Olefinpolymerisate sind aus der Polymerchemie wohlbekannt, so daß an dieser Stelle nicht näher darauf eingegangen werden muß. Die Polymerisate sind thermoplastisch, d.h. sie werden bei Erhöhung der Temperatur nach Überschreitung ihres Erweichungspunktes weich und erhärten bei Abkühlung wieder.

Als Styrolpolymerisate kommen Polystyrol (Schmelzindex 1 bis 12 g/10 min), Styrol-Acrylnitril-Copolymerisate (Schmelzindex 0,5 bis 2,5 g/10 min) und schlagzäh modifizierte Polystyrole (ABS, Schmelzindex 1 bis 12 g/10 min) und Styrol-Acrylnitril-Copolymerisate (Schmelzindex 3 bis 30 g/10 min) in Frage, wobei der Schmelzindex bestimmt wurde nach DIN 53 735 bei einer Temperatur von 200$^{o}$C und einem Auflagegewicht von 5 kg. Das Molekulargewicht sämtlicher Styrolpolymerisate aus der Lösungsviskosität liegt zwischen 150 000 und 500000, bestimmt durch Viskositätsmessungen in 0,5 gewichtsprozentiger Toluollösung bei 25$^{o}$C bzw. 0,5 gewichtsprozentiger Dimethylformamidlösung bei 25$^{o}$C für ABS und ASA. Auch diese Polymerisate sind aus der Polymerchemie bekannt, so daß nicht näher auf sie eingegangen werden muß. Es sei in diesem Zusammenhang auf die Literaturstelle Kunststoff-Taschenbuch, Carl Hanser Verlag, 20. Ausgabe, Seite 246 ff. hingewiesen.

Unter Carboxylgruppen enthaltenden Olefinpolymerisaten sind vor allem Pfropfpolymerisate von monoäthylenisch ungesättigten Carbonsäuren auf Polyolefine zu verstehen, die in den DE-OS 26 58 810 und 21 08 749 beschrieben sind. Bei den Carboxylgruppen enthaltenden Styrolpolymerisaten kommen vor allem solche in Betracht, die man durch Pfropfung von Styrol und Maleinsäureanhydrid auf Polystyrol erhält, wie in der DE-OS 21 08 749 beschrieben. Geeignet sind aber auch die aus der Literatur bekannten Copolymerisate aus Olefinen bzw. Styrol mit monoäthylenisch ungesättigten Carbonsäuren (vgl. z.B. DE-PS 15 20 497).

Als Magnesiumoxid werden die marktgängigen Qualitäten, die bevorzugt einen MgO-Gehalt von mindestens 90 Gew.% aufweisen, verwendet. Bevorzugt ist ferner eine Qualität, die durch Fällung aus wäßrigem Medium hergestellt wurde. Die Korngröße des feinteiligen Magnesiumoxids soll 0,01 bis

40 μm, vorzugsweise 0,5 bis 10 μm, betragen. Das Magnesiumoxid ist in der Mischung mit 1 bis 15, bevorzugt 2 bis 8
Gewichtsteilen, enthalten.

Die Formmassen können neben den aufgeführten Hauptkomponenten (A), (B) und (C) noch die üblichen Zusätze (D) wie
Verarbeitungshilfsmittel, Polymerstabilisatoren, andere
Korrosionsinhibitoren und Farbstoffe in üblichen Mengen
enthalten.

Die Herstellung der erfindungsgemäßen Formmassen kann mit
den üblichen Knet- und Mischvorrichtungen erfolgen. So ist
es z.B. möglich, das Holzmehl mit feinteiligem Polymerisat
und Magnesiumoxid in einem Taumelmischer bei Raumtemperatur zu mischen und diese Mischung direkt einer weiteren
Verarbeitung auf dem Spritzgrußsektor oder dem Extrusionssektor zuzuführen. Eine andere Ausführungsform besteht
darin, das homogene Gemisch vor der Weiterverarbeitung mechanisch in marktgängigen Kompaktiervorrichtungen gezielt
zu verdichten.

Eine weitere Ausführungsform besteht darin, das homogene
Gemisch auf Temperaturen im Bereich der Schmelztemperatur
der eingesetzten Thermoplastkomponente zu bringen und
damit ein Aufsintern des Holzmehls und des Magnesiumoxids
auf die betreffende feinteilige Polymerphase zu bewirken.
Ferner ist es möglich, die Komponenten getrennt oder in
einem groben Gemisch in einen Extruder gegebenenfalls mit
Entgasungsvorrichtung zu geben und dort bei Temperaturen
oberhalb der Schmelztemperatur des thermoplastischen Kunststoffmaterials homogen zu vermischen. Die schmelzflüssigen
Mischungen können dann direkt durch Extrusionsverfahren
zu geformten Formteilen wie dicken Folien, Platten, Profilen etc. weiterverarbeitet werden, sie können aber auch
durch Düsen in Strangform ausgepreßt, abgekühlt und zu Granulaten geschnitten werden, die z.B. im Spritzguß zu Formteilen weiterverarbeitet werden.

Die Formmassen eignen sich insbesondere für den Spritzgruß und für die Extrusion. Sie zeichnen sich durch eine hellere Eigenfarbe aus als Einstellungen, die nicht mit Magnesiumoxid stabilisiert sind und zeigen deutlich geringeren Werkzeugbelag und Korrosionserscheinigungen als unstabilisierte Produkte.

Zur Überprüfung dieser Effekte bei den erfindungsgemäßen Formmassen wurden in einen Zweischneckenkneter 70 Gewichtsteile Polymerisat (Tab. 1), 30 Gewichtsteile Holzmehl vom Typ Fichte mit einer mittleren Teilchengröße von 10 bis 150 µm und 1 Teil Magnesiumoxid (98 %ig) mit einer mittleren Korngröße unter 1 µm zudosiert, bei einer Temperatur von 200 bis 230°C das Polymerisat aufgeschmolzen und mit den Zuschlägen innig vermischt. Das schmelzflüssige Gemisch wurde durch Lochdüsen ausgepreßt, gekühlt und granuliert.

In einer in "Kunststoffe" 67 (1977), Heft 2, Seite 87 beschriebenen modifizierten Spritzgrußmaschine wurde der Korrosionseinfluß durch die Gewichtsabnahme in mg pro $cm^2$ eingelegter Metallplättchen bestimmt, nachdem jeweils 10 kg Formmasse unter gleichen Bedingungen durchgesetzt worden war. Die Daten sind in Tab. 2 aufgeführt.

Zur Erfassung der Belagbildung wurden auf einer marktgängigen Spritzgrußmaschine Rundscheiben in den Abmessungen 2 x 60 mm hergestellt und festgestellt, nach welcher Anzahl von Spritzgrußvorgängen ein erster Formbelag sichtbar wurde. Die Ergebnisse sind in Tab. 3 zusammengefaßt.

0002766

Wie aus den Tabellen 2 und 3 ersichtlich, wird bei der erfindungsgemäßen Verwendung von Magnesiumoxid sowohl die Gefahr der Korrosion als auch der Belagbildung bei der Verarbeitung holzmehlgefüllter Thermoplaste drastisch reduziert.

Tabelle 1

| Mischungs-Nr. | | Komponente C |
|---|---|---|
| 1 | Polypropylen, MI 5,0, 230°C/2,16 kg | - |
| 2 | Polypropylen, MI 5,0, 230°C/2,16 kg | MgO |
| 3 | Polyäthylen, MI 4,2, 190°C/2,16 kg, D 0,95 | - |
| 4 | Polyäthylen, MI 4,2, 190°C/2,16 kg, D 0,95 | MgO |
| 5 | Polystyrol, MI 9 , 200°C/5 kg | - |
| 6 | Polystyrol, MI 9 , 200°C/5 kg | MgO |

MI = Meltindex in g/10 min

D = Dichte in $g/cm^3$

Tabelle 2

| Mischungs Nr. | Gewichtsverlust in $mg/cm^2$ |
|---|---|
| 1 | 27 |
| 2 | 3 |
| 3 | 31 |
| 4 | 0 |
| 5 | 16 |
| 6 | 0 |

0002766

## Tabelle 3

| Mischungs Nr. | erster Belag nach x Spritzgußvorgängen |
|---|---|
| 1 | $x = 50$ |
| 2 | $x = 5\ 000$ |
| 3 | $x = 75$ |
| 4 | $x = 6\ 500$ |
| 5 | $x = 40$ |
| 6 | $x = 4\ 500$ |

0002766

Patentansprüche

1. Formmassen, bestehend aus einem homogenen Gemisch aus

A) 100 Gewichtsteilen Holzteilchen mit Teilchengrößen von 10 bis 5 000 $\mu$m,

B) 50 bis 900 Gewichtsteilen eines thermoplastischen Olefinpolymerisats mit einem Schmelzindex zwischen 0,01 und 20 g/10 min und einer Dichte zwischen 0,890 und 0,965 g/cm$^3$ oder eines thermoplastischen Styrolpolymerisats mit einem Schmelzindex zwischen 0,5 und 30 g/10 min und einem Molekulargewicht aus der Lösungsviskosität zwischen 150 000 und 500 000,

C) 1 bis 15 Gewichtsteilen eines Magnesiumoxids mit Teilchengrößen von 0,01 bis 40 $\mu$m sowie gegebenenfalls

D) übliche Zusätze in üblichen Mengen.

2. Formmassen nach Anspruch 1, dadurch gekennzeichnet, daß die Mischungskomponente (B) besteht aus Carboxylgruppen enthaltenden Olefin- oder Styrolpolymerisaten.

3. Verwendung der Formmassen nach Anspruch 1 zur Herstellung geformter Formteile.

# EUROPÄISCHER RECHERCHENBERICHT

**Europäisches Patentamt**

**0002766**

Nummer der Anmeldung
EP 78 10 1739

| Kategorie | Kennzeichnung des Dokuments mit Angabe, soweit erforderlich, der maßgeblichen Teile | betrifft Anspruch |
|---|---|---|
| **EINSCHLÄGIGE DOKUMENTE** | | |
| X | DE - C - 944 686 (HOLZWERKE H. WILHELMI) <br><br> * Ansprüche 1,2; Seite 2, Zeilen 10-32 * | 1,3 |
| | US - A - 3 892 586 (JANOS VLADAR UND ANDERE) <br><br> * Patentanspruch 1; Spalte 5, Zeilen 33-49 * | 1,3 |
| A | CH - A - 110 439 (WOLDEMAR MARTINOFF) <br><br> * Patentanspruch * | 1 |
| A | US - A - 3 011 900 (WILLIAM T. GLAB) <br><br> * Patentanspruch * | 1 |
| A | DE - A - 2 524 699 (WILKE, KLAUS-DIETHER) <br><br> * Patentansprüche 1,4 * | 1 |
| A | DE - A - 2 451 667 (SIMATUPANG MARULIH) <br><br> * Patentansprüche 1,2 * | 1 |

**KLASSIFIKATION DER ANMELDUNG (Int.Cl.²)**

C 08 L 97/02
23/02
25/04 //
(C 08 K 3/22,
C 08 L 23/02,
25/04, 97/02)

**RECHERCHIERTE SACHGEBIETE (Int. Cl.²)**

C 08 L 23/00
23/02
23/04
23/08
23/10
23/12
23/14
25/00
25/02
25/04
25/06
97/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-02-1979 | GOOVAERTS |

EPA form 1503.1 06.78